# EUROPÄISCHE PATENTSCHRIFT

(11) **EP 3 062 000 B1**
(45) Veröffentlichungstag und Bekanntmachung des Hinweises auf die Patenterteilung: **03.04.2019**
(21) Anmeldenummer: 15156700.5
(22) Anmeldetag: 26.02.2015
(51) Int. Cl.: F16J 15/3296, G01M 13/04, F16C 19/52

(54) **Anordnung mit FOFW-System**
Assembly with FOFW system
Agencement doté de système FOFW

(43) Veröffentlichungstag der Anmeldung: 31.08.2016
(73) Patentinhaber: Flender GmbH, 46395 Bocholt (DE)
(72) Erfinder: Dinter, Martin, Dr, 45888 Gelsenkirchen (DE); Jansen, Udo, 46397 Bocholt (DE); Meyer, Thomas, Dr, 52223 Stolberg (DE); Reimers, Jan-Dirk, Dr, 52074 Aachen (DE)
(74) Vertreter: Maier, Daniel Oliver

(56) Entgegenhaltungen:
- EP-A1- 1 293 766
- EP-A2- 1 621 863
- WO-A1-2011/069519
- WO-A1-2013/159840
- DE-B4- 10 024 035
- JP-A- 2006 138 873
- US-A1- 2002 050 754
- US-A1- 2007 063 870
- US-A1- 2007 115 131
- US-A1- 2007 159 352
- US-A1- 2013 270 814

## Beschreibung

Die vorliegende Erfindung betrifft eine Anordnung mit einem Gehäuse, zumindest einer innerhalb des Gehäuses angeordneten und mittels Lagerungen gestützten Welle, die sich durch eine Gehäuseöffnung hindurch erstreckt, wobei zwischen dem Gehäuse und der Welle im Bereich der Gehäuseöffnung ein Wellendichtring angeordnet ist, und zumindest einem FOFW-System (Funkabfragbares Oberflächenwellensensor-System), das eine Abfrageeinheit, zumindest eine elektrisch mit der Abfrageeinheit verbundene ortsfeste Antenne, zumindest eine ortsfest an der Welle befestigte mitdrehende Antenne und zumindest einen ortsfest an der Welle befestigten und elektrisch mit der zumindest einen mitdrehenden Antenne verbundenen FOFW-Sensor (Funkabfragbarer Oberflächenwellensensor) aufweist.

Derartige Anordnungen, bei denen funktionsrelevante Bauteile unter Einsatz eines FOFW-Systems überwacht werden, sind im Stand der Technik bereits bekannt. FOFW-Sensoren zeichnen sich zum einen dahingehend aus, dass sie keine gesonderte Energiequelle benötigen. Zum anderen weisen sie einen sehr einfachen Aufbau auf, weshalb sie normalerweise sehr preiswert und wartungsfrei sind. Zudem halten sie hohen thermischen und elektromagnetischen Beanspruchungen stand. Vor diesem Hintergrund eignen sich FOFW-Sensoren für den Einsatz an schwer zugänglichen Orten, insbesondere an rotierenden Bauteilen. So offenbart beispielsweise die DE 100 24 035 B4 eine Anordnung mit einem Gehäuse und einer innerhalb des Gehäuses angeordneten und mittels Lagerungen gestützten Welle, die sich durch eine Gehäuseöffnung hindurch erstreckt, wobei zwischen dem Gehäuse und der Hohlwelle im Bereich der Gehäuseöffnung ein Wellendichtring angeordnet ist. Die Anordnung umfasst ein FOFW-System mit einer Abfrageeinheit, einer ortsfesten Antenne, einer mitdrehenden Antenne und einem FOFW-Sensor. Der Sensor ist mittels einer Sensorpatrone in eine Axialbohrung der Welle eingesetzt und über eine Verbindungsleitung, die sich ausgehend von der Axialbohrung radial durch die Welle erstreckt, mit der an der Welle befestigten mitdrehenden Antenne verbunden. Der mitdrehenden Antenne radial gegenüberliegend ist mit radialem Abstand die ortsfeste Antenne positioniert, die in den Wellendichtring integriert ist. Ein Nachteil einer solchen Anordnung besteht darin, dass die ortsfeste Antenne nicht flexibel positionierbar ist, da sie in den Wellendichtring integriert ist, der normalerweise ein Zukaufteil darstellt. Darüber hinaus schirmt ein Wellendichtring keine elektromagnetische Strahlung ab, weshalb die ortsfeste Antenne nicht vor äußeren Einflüssen geschützt ist, was zu fehlerhaften Messergebnissen führen kann.

Ausgehend von diesem Stand der Technik ist es eine Aufgabe der vorliegenden Erfindung, eine alternative Anordnung der eingangs genannten Art zu schaffen.

Zur Lösung dieser Aufgabe schafft die vorliegende Erfindung eine Anordnung der eingangs genannten Art, die dadurch gekennzeichnet ist, dass ein ringartig ausgebildeter Gehäusedeckel vorgesehen ist, der die Gehäuseöffnung verschließt, und dass die zumindest eine ortsfeste Antenne an dem Gehäusedeckel befestigt und in axialer Richtung in einem definierten Abstand gegenüber der mitdrehenden Antenne positioniert ist, wobei die ortsfeste Antenne und die mitdrehende Antenne in radialer Richtung einander überlappend angeordnet sind. Die Anordnung der ortsfesten Antenne am Gehäusedeckel ist dahingehend von Vorteil, dass die im Inneren des Gehäuses angeordneten FOFW-Systemkomponenten gut zugänglich sind. Auf diese Weise ist die nachträgliche Montage des FOFW-Systems ebenso wie die Durchführung von Wartungsarbeiten problemlos möglich. Ein weiterer Vorteil besteht darin, dass der Gehäusedeckel die Antennen nach außen abschirmt, wodurch eine Beeinträchtigung des FOFW-Systems durch äußere Einflüsse effektiv verhindert wird. Dank der Tatsache, dass die Antennen axial benachbart zueinander und radial einander überlappend angeordnet sind, wird eine gute Datenübertragung erzielt. Zudem lassen sich die Antennen sehr gut zueinander ausrichten.

Gemäß einer Ausgestaltung der vorliegenden Erfindung ist/sind die zumindest eine ortsfeste Antenne und/oder die zumindest eine mitdrehende Antenne ringförmig oder ringsegmentförmig ausgebildet. Eine solche Bauweise ist dahingehend von Vorteil, dass die Antennen zeitgleich als Ölschleuderung bzw. als Labyrinthdichtung wirken.

Bevorzugt weist der Gehäusedeckel ein ringartig ausgebildetes erstes Gehäusedeckelelement mit größerem Innendurchmesser, das stützend auf zumindest eine Lagerung wirkt, und ein ringartig ausgebildetes zweites Gehäusedeckelelement mit kleinem Innendurchmesser auf, an dem ein Wellendichtring angeordnet ist. Aufgrund der Tatsache, dass nur das erste Gehäusedeckelelement eine Stützfunktion aufweist, kann das zweite Gehäusedeckelelement ohne weiteres demontiert werden, ohne die Stabilität der Lagerung und damit der Anordnung insgesamt zu gefährden. Entsprechend lassen sich Montage-, Demontage- sowie Wartungsarbeiten in einfacher Art und Weise durchführen. Insbesondere lässt sich das FOFW-System auch dann einbauen, wenn die restliche Anordnung bereits montiert ist.

Gemäß einer Variante der vorliegenden Erfindung ist die zumindest eine ortsfeste Antenne an einer zum Innern des Gehäuses weisenden Stirnfläche des zweiten Gehäusedeckelelementes angeordnet.

Bei einer anderen Variante der vorliegenden Erfindung ist die zumindest eine ortsfeste Antenne an einer zum zweiten Gehäusedeckelelement weisenden Stirnfläche des ersten Gehäusedeckelelementes angeordnet.

Bevorzugt ist der zumindest eine FOFW-Sensor derart innerhalb einer am Außenumfang der Welle ausgebildeten Aussparung angeordnet, dass seine Oberseite nicht auswärts aus der Aussparung vorsteht. Entsprechend kann beispielsweise eine benachbart zum FOFW-Sensor an der Welle angeordnete Lagerung über den FOFW-Sensor hinweg von der Welle abgezogen werden, ohne den FOFW-Sensor zuvor ausbauen zu müssen.

Vorteilhaft ist die Aussparung nutförmig ausgebildet, insbesondere als Umfangsnut. Auf diese Weise ergibt sich ein sehr einfacher Aufbau.

Gemäß einer Ausgestaltung der vorliegenden Erfindung ist der zumindest eine FOFW-Sensor mit einem Schutzüberzug versehen, wie beispielsweise mit einer Silikonmasse, um nur ein Beispiel zu nennen. Dank eines solchen Schutzüberzugs ist der FOFW-Sensor vor negativen äußeren Einflüssen geschützt.

Bevorzugt ist die mitdrehende Antenne an einem an der Welle befestigten Haltering angeordnet. Auf diese Weise wird ein einfacher Aufbau erzielt.

Der Haltering deckt bevorzugt eine in der Welle ausgebildete und den zumindest einen FOFW-Sensor aufnehmende Aussparung zumindest teilweise ab. Entsprechend wird der FOFW-Sensor durch den Haltering der mitdrehenden Antenne geschützt. In diesem Fall kann grundsätzlich auf einen zusätzlichen Schutz des Sensors durch einen Schutzüberzug verzichtet werden.

Weitere Merkmale und Vorteile der vorliegenden Erfindung werden anhand der nachfolgenden Beschreibung verschiedener erfindungsgemäßer Anordnungen unter Bezugnahme auf die beiliegende Zeichnung deutlich. Darin ist
- Figur 1: eine schematische geschnittene Teilansicht einer Anordnung gemäß einer ersten Ausführungsform der vorliegenden Erfindung und
- Figur 2: eine schematische geschnittene Teilansicht einer Anordnung gemäß einer zweiten Ausführungsform der vorliegenden Erfindung.

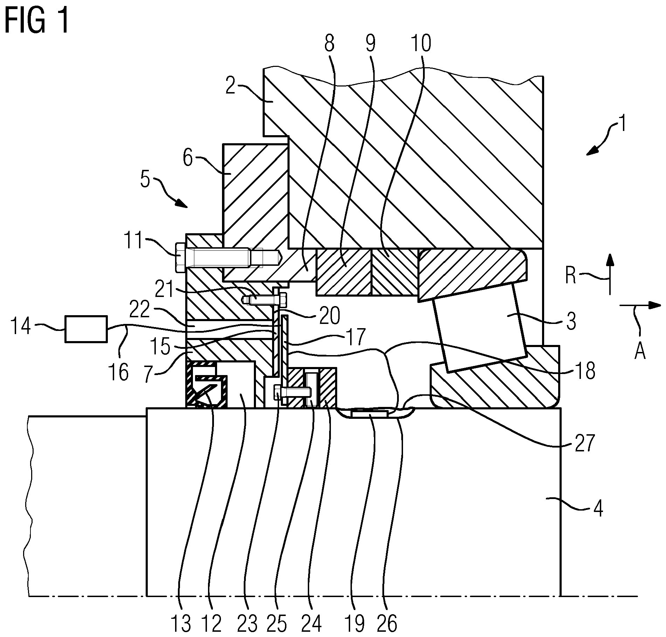

Figur 1 zeigt eine Teilansicht einer Anordnung 1 gemäß einer Ausführungsform der vorliegenden Erfindung. Die Anordnung 1 umfasst ein Gehäuse 2, in dem eine mittels Lagerungen gestützte Welle 4 angeordnet ist, wobei nur die Lagerung 3 dargestellt ist. Das Gehäuse 2 ist mit einer Gehäuseöffnung versehen, durch die sich die Welle 4 hindurch erstreckt. Zum Verschließen der Gehäuseöffnung ist ein zweiteiliger Gehäusedeckel 5 vorgesehen, der ein ringartig ausgebildetes erstes Gehäusedeckelelement 6 mit größerem Innendurchmesser und ein ringartig ausgebildetes zweites Gehäusedeckelelement 7 mit kleinerem Innendurchmesser aufweist. Das erste Gehäusedeckelelement 6 ist mit nicht näher dargestellten Schrauben an das Gehäuse 2 geschraubt und im Bereich seines Innenumfangs mit einem in Richtung der Lagerung 3 weisenden ringförmigen Absatz 8 versehen, der über Distanzringe 9 und 10 axial gegen den äußeren Lagerring der Lagerung 3 drückt, so dass die Lagerung 3 durch das erste Gehäusedeckelelement 6 des Gehäusedeckels 5 gestützt wird. Das zweite Gehäusedeckelelement 7 ist an dem ersten Gehäusedeckelelement 6 mittels Schrauben 11 befestigt und nimmt in einer an seinem Innenumfang ausgebildeten ringförmigen Ausnehmung 12 einen Wellendichtring 13 auf, der in bekannter Weise den Zwischenraum zwischen dem zweiten Gehäusedeckelelement 7 und der Welle 4 abdichtet.

Zur Überwachung der Lagerung 3 ist die Anordnung 1 mit einem FOFW-System ausgestattet. Das FOFW-System umfasst eine Abfrageeinheit 14, eine ortsfeste Antenne 15, die elektrisch mit der Abfrageeinheit 14 über eine entsprechende Leitung 16 verbunden ist, eine ortsfest an der Welle 4 befestigte mitdrehende Antenne 17 und einen ortsfest an der Welle 4 befestigten und elektrisch über eine Leitung 18 mit der mitdrehenden Antenne 17 verbundenen FOFW-Sensor 19, der benachbart zur Lagerung 3 positioniert ist.

Die ortsfeste Antenne 15 ist ringförmig ausgebildet und vorliegend an einer zum Inneren des Gehäuses 2 weisenden Stirnfläche 20 des zweiten Gehäusedeckelelementes 7 mittels Schrauben 21 befestigt. Ausgehend von der Stirnfläche 20 erstreckt sich auswärts durch das zweite Gehäusedeckelelement 7 eine Bohrung 22, welche die Leitung 16 aufnimmt.

Die mitdrehende Antenne 17 ist ebenfalls ringförmig ausgebildet und mittels Schrauben 23 an einem Haltering 24 befestigt, der wiederum über Madenschrauben 25 an der Welle 4 festgelegt ist. Die mitdrehende Antenne 17 ist in axialer Richtung A in einem definierten Abstand a gegenüber der ortsfesten Antenne 15 positioniert, wobei die ortsfeste Antenne 15 und die mitdrehende Antenne 17 derart angeordnet sind, dass sie in radialer Richtung R einander überlappen.

Der FOFW-Sensor 19 ist innerhalb einer an der Welle 4 ausgebildeten Aussparung 26 an der Welle 4 befestigt, die als Umfangsnut ausgebildet ist. Die Tiefe der Umfangsnut ist dabei derart gewählt, dass die Oberseite des FOFW-Sensors 19 nicht auswärts aus der Aussparung 26 vorsteht. Zum Schutz des FOFW-Sensors vor äußeren Einflüssen ist dieser mit einem Schutzüberzug 27 versehen, der vorliegend durch eine Silikonschicht gebildet ist.

Während des Betriebs der Anordnung 1 erfasst das FOFW-System zumindest eine, bevorzugt jedoch mehrere physikalische Größen, anhand derer Rückschlüsse auf den Zustand und die noch verbleibende Lebensdauer der Lagerung 3 geschlossen werden können. Bei den physikalischen Größen kann es sich beispielsweise um die Temperatur und/oder um ein Drehmoment und/oder um eine Kraft und/oder um eine Kraftverteilung und/oder um eine Verformung etc. handeln.

Ein wesentlicher Vorteil der in Figur 1 dargestellten Anordnung besteht darin, dass sich das FOFW-System auch dann installieren lässt, wenn die Anordnung im Übrigen bereits montiert ist. Hierzu wird lediglich das zweite Gehäusedeckelelement 7 entfernt, woraufhin der erforderliche Installationsraum von außen zugänglich ist. Ebenso einfach lässt sich das FOFW-System auch warten oder demontieren. Das erste Gehäusedeckelelement 6 gewährleistet während der Montage, Demontage oder Wartung die Stabilität der Anordnung 1, da es mit seinem Absatz 8 auch bei abgenommenen zweiten Gehäusedeckelelement 8 über die Distanzringe 9 und 10 gegen den äußeren Lagerring der Lagerung 3 drückt. Ein weiterer Vorteil besteht darin, dass die Antennen 15 und 17 durch den Gehäusedeckel 5 elektromagnetisch abgeschirmt werden, was eine ordnungsgemäße Funktionsweise des FOFW-Systems gewährleistet. Darüber hinaus wirken die Antennen 15 und 17 dank ihrer Ausbildung und Anordnung als Ölschleuderung bzw. als Labyrinthdichtung und gewährleisten eine ordnungsgemäße Informations- und/oder Energieübertragung. Es sei darauf hingewiesen, dass der Haltering 24, der die mitdrehende Antenne 17 an der Welle 4 montiert, grundsätzlich auch derart ausgebildet und angeordnet sein kann, dass er die Aussparung 26 und den in der Aussparung angeordneten FOFW-Sensor 19 abdeckt und somit vor äußeren Einflüssen schützt. In diesem Fall kann grundsätzlich auf den Schutzüberzug 27 verzichtet werden.

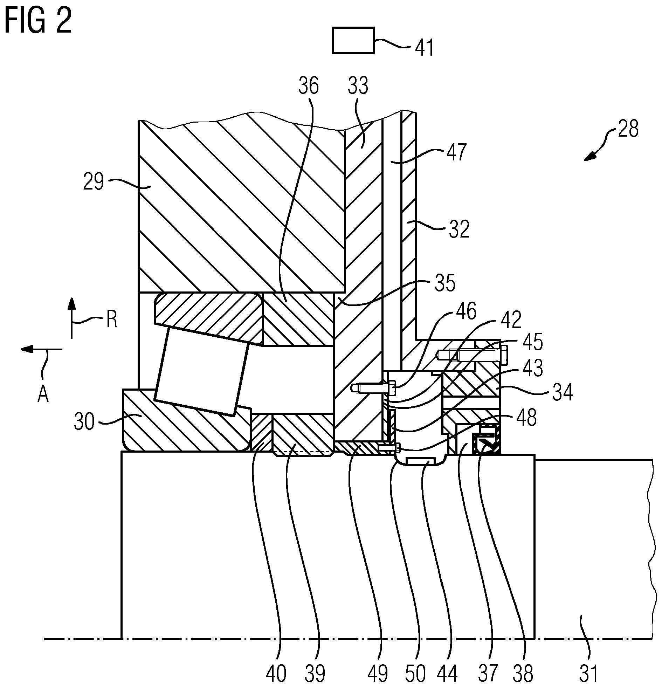

Figur 2 zeigt eine Teilansicht einer Anordnung 28 gemäß einer weiteren Ausführungsform der vorliegenden Erfindung. Die Anordnung 28 umfasst ein Gehäuse 29, in dem eine mittels Lagerungen gestützte Welle 31 angeordnet ist, wobei nur die Lagerung 30 dargestellt ist. Das Gehäuse 29 ist mit einer Gehäuseöffnung versehen, durch die sich die Welle 31 hindurch erstreckt. Zum Verschließen der Gehäuseöffnung ist ein zweiteiliger Gehäusedeckel 32 vorgesehen, der ein ringartig ausgebildetes erstes Gehäusedeckelelement 33 mit größerem Innendurchmesser und ein ringartig ausgebildetes zweites Gehäusedeckelelement 34 mit kleinerem Innendurchmesser aufweist. Das erste Gehäusedeckelelement 33 ist mit nicht näher dargestellten Schrauben an das Gehäuse 29 geschraubt und im Bereich seines Innenumfangs mit einem in Richtung der Lagerung 30 weisenden ringförmigen Absatz 35 versehen, der über einen Distanzring 36 axial gegen den äußeren Lagerring der Lagerung 30 drückt, so dass die Lagerung 30 durch das erste Gehäusedeckelelement 33 des Gehäusedeckels 32 gestützt wird. Das zweite Gehäusedeckelelement 34 ist an dem ersten Gehäusedeckelelement 33 mit ebenfalls nicht näher dargestellten Schrauben befestigt und nimmt in einer an seinem Innenumfang ausgebildeten ringförmigen Ausnehmung 37 einen Wellendichtring 38 auf, der in bekannter Weise den Zwischenraum zwischen dem zweiten Gehäusedeckelelement 34 und der Welle 31 abdichtet. Als Anschlag für den Lagerinnenring der Lagerung 30 ist auf die Welle 31 im Bereich zwischen dem ersten Gehäusedeckelelement 33 und der Lagerung 30 ein Gewindering 39 geschraubt, der über einen auf die Welle 31 aufgeschobenen Distanzring 40 gegen den unteren Lagerring drückt.

Zur Überwachung der Lagerung 30 ist die Anordnung 28 mit einem FOFW-System ausgestattet. Das FOFW-System umfasst eine Abfrageeinheit 41, eine ortsfeste Antenne 42, die elektrisch mit der Abfrageeinheit 40 über eine nicht näher dargestellte Leitung verbunden ist, eine ortsfest an der Welle 31 befestigte mitdrehende Antenne 43 und einen ortsfest an der Welle 31 befestigten und elektrisch über eine ebenfalls nicht näher dargestellte Leitung mit der mitdrehenden Antenne 41 verbundenen FOFW-Sensor.

Die ortsfeste Antenne 42 ist ringförmig ausgebildet und vorliegend an einer zum zweiten Gehäusedeckelelement 34 weisenden Stirnfläche 45 des ersten Gehäusedeckelelementes 33 mittels Schrauben 46 befestigt. Im Bereich der Stirnfläche 45 mündet eine sich radial durch das erste Gehäusedeckelelement 33 erstreckende Bohrung 47, die zur Aufnahme der Leitung dient, welche die ortsfeste Antenne mit der Abfrageeinheit 41 verbindet.

Die mitdrehende Antenne 43 ist ebenfalls ringförmig ausgebildet und mittels Schrauben 48 an einem Haltering 49 befestigt, der wiederum über nicht näher dargestellte Madenschrauben an der Welle 31 festgelegt ist. Die mitdrehende Antenne 43 ist in axialer Richtung A in einem definierten Abstand a gegenüber der ortsfesten Antenne 42 positioniert, wobei die ortsfeste Antenne 42 und die mitdrehende Antenne 43 derart angeordnet sind, dass sie in radialer Richtung R einander überlappen.

Der FOFW-Sensor 44 ist innerhalb einer an der Welle 31 ausgebildeten Aussparung 50 an der Welle 31 befestigt, die als Umfangsnut ausgebildet ist. Die Tiefe der Umfangsnut ist dabei derart gewählt, dass die Oberseite des FOFW-Sensors 44 nicht auswärts aus der Aussparung 50 vorsteht.

Auch die in Figur 2 dargestellte Anordnung 28 zeichnet sich durch eine sichere Funktionsweise sowie durch eine einfache Montage, Wartung und Demontage des FOFW-Systems aus, wobei eine Montage, Wartung oder Demontage auch dann erfolgen kann, während alle anderen Komponenten der Anordnung 28 bereits montiert sind bzw. montiert bleiben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (1; 28) mit einem Gehäuse (2; 29), zumindest einer innerhalb des Gehäuses (2; 29) angeordneten und mittels Lagerungen (3; 30) gestützten Welle (4; 31), die sich durch eine Gehäuseöffnung hindurch erstreckt, wobei zwischen dem Gehäuse (2; 29) und der Welle (4; 31) im Bereich der Gehäuseöffnung ein Wellendichtring (13; 38) angeordnet ist, und zumindest mit einem funkabfragbaren Oberflächenwellensensor-System, d.h. mit einem FOFW-System, das eine Abfrageeinheit (14; 41), zumindest eine elektrisch mit der Abfrageeinheit (14; 41) verbundene ortsfeste Antenne (15; 42), zumindest eine ortsfest an der Welle (4; 31) befestigte mitdrehende Antenne (17; 43) und zumindest einen ortsfest an der Welle (4; 31) befestigten und elektrisch mit der zumindest einen mitdrehenden Antenne (17; 43) verbundenen funkabfragbaren Oberflächenwellensensor, d.h. FOFW-Sensor (19; 44) aufweist, **dadurch gekennzeichnet, dass** ein ringartig ausgebildeter Gehäusedeckel (5; 32) vorgesehen ist, der die Gehäuseöffnung verschließt, und dass die zumindest eine ortsfeste Antenne (15; 42) an dem Gehäusedeckel (5; 32) befestigt und in axialer Richtung (A) in einem definierten Abstand (a) gegenüber der mitdrehenden Antenne (17; 43) positioniert ist, wobei die ortsfeste Antenne (15; 42) und die mitdrehende Antenne (17; 43) in radialer Richtung (R) einander überlappend angeordnet sind.

2. Anordnung (1; 28) nach Anspruch 1, **dadurch gekennzeichnet, dass** die zumindest eine ortsfeste Antenne (15; 42) und/oder die zumindest eine mitdrehende Antenne (17; 43) ringförmig oder ringsegmentförmig ausgebildet ist/sind.

3. Anordnung (1; 28) nach einem der vorhergehenden Ansprüche, **dadurch gekennzeichnet, dass** der Gehäusedeckel (5; 32) ein ringartig ausgebildetes erstes Gehäusedeckelelement (6; 33) mit größerem Innendurchmesser, das stützend auf zumindest eine Lagerung (3; 30) wirkt, und ein ringartig ausgebildetes zweites Gehäusedeckelelement (7; 34) mit kleinem Innendurchmesser aufweist, an dem der Wellendichtring (13; 38) angeordnet ist.

4. Anordnung (1) nach Anspruch 3, **dadurch gekennzeichnet, dass** die zumindest eine ortsfeste Antenne (15) an einer zum Innern des Gehäuses (2) weisenden Stirnfläche (20) des zweiten Gehäusedeckelelementes (7) angeordnet ist.

5. Anordnung (28) nach Anspruch 3, **dadurch gekennzeichnet, dass** die zumindest eine ortsfeste Antenne (42) an einer zum zweiten Gehäusedeckelelement (34) weisenden Stirnfläche (45) des ersten Gehäusedeckelelementes (33) angeordnet ist.

6. Anordnung (1; 28) nach einem der vorhergehenden Ansprüche, **dadurch gekennzeichnet, dass** der zumindest eine FOFW-Sensor (19; 44) derart innerhalb einer am Außenumfang der Welle (4; 31) ausgebildeten Aussparung (26; 50) angeordnet ist, dass seine Oberseite nicht auswärts aus der Aussparung (26; 50) vorsteht.

7. Anordnung (1; 28) nach Anspruch 6, **dadurch gekennzeichnet, dass** die Aussparung (26; 50) nutförmig ausgebildet ist, insbesondere als Umfangsnut.

8. Anordnung (1) nach einem der vorhergehenden Ansprüche, **dadurch gekennzeichnet, dass** der zumindest eine FOFW-Sensor (19) mit einem Schutzüberzug (27) versehen ist.

9. Anordnung (1; 28) nach einem der vorhergehenden Ansprüche, **dadurch gekennzeichnet, dass** die mitdrehende Antenne (17; 43) an einem an der Welle (4; 31) befestigten Haltering (24; 49) angeordnet ist.

10. Anordnung (1) nach Anspruch 9, **dadurch gekennzeichnet, dass** der Haltering (24) eine in der Welle (4) ausgebildete und den zumindest einen FOFW-Sensor (19) aufnehmende Aussparung (26) zumindest teilweise abdeckt.

## Claims

1. Arrangement (1; 28) comprising a housing (2; 29), at least one shaft (4; 31) which is arranged within the housing (2; 29) and is supported by means of bearing assemblies (3; 30) and projects through a housing opening, wherein a shaft sealing ring (13; 38) is arranged between the housing (2; 29) and the shaft (4; 31) in the region of the housing opening, and with at least one wirelessly interrogable surface acoustic wave sensor system, i.e. with a wirelessly interrogable SAW system, wherein said wirelessly interrogable surface acoustic wave sensor system has an interrogation unit (14; 41), at least one positionally fixed antenna (15; 42) that is electrically connected to the interrogation unit (14; 41), at least one co-rotating antenna (17; 43) that is attached to the shaft (4; 31) in a positionally fixed manner, and at least one wirelessly interrogable surface acoustic wave sensor, i.e. wirelessly interrogable SAW sensor (19; 44), that is attached to the shaft (4; 31) in a positionally fixed manner and is electrically connected to the at least one co-rotating antenna (17; 43), **characterised in that** an annular housing cover (5; 32) is provided which encloses the housing opening, and that the at least one positionally fixed antenna (15; 42) is attached to the housing cover (5; 32) and is positioned at a defined distance (a) from the co-rotating antenna (17; 43) in an axial direction (A), wherein the positionally fixed antenna (15; 42) and the co-rotating antenna (17; 43) are so arranged as to overlap each other in a radial direction (R).

2. Arrangement (1; 28) according to claim 1, **characterised in that** the at least one positionally fixed antenna (15; 42) and/or the at least one co-rotating antenna (17; 43) is/are designed in the form of a ring or ring segment.

3. Arrangement (1; 28) according to one of the preceding claims, **characterised in that** the housing cover (5; 32) comprises an annular first housing cover element (6; 33), which has a larger internal diameter and acts as a support for at least one bearing assembly (3; 30), and an annular second housing cover element (7; 34), which has a small internal diameter and on which the shaft sealing ring (13; 38) is arranged.

4. Arrangement (1) according to claim 3, **characterised in that** the at least one positionally fixed antenna (15) is arranged on a face (20), which is oriented towards the interior of the housing (2), of the second housing cover element (7).

5. Arrangement (28) according to claim 3, **characterised in that** the at least one positionally fixed antenna (42) is arranged on a face (45), which is oriented towards the second housing cover element (34), of the first housing cover element (33) .

6. Arrangement (1; 28) according to one of the preceding claims, **characterised in that** the at least one wirelessly interrogable SAW sensor (19; 44) is arranged within a recess (26; 50), which is formed on the outer circumference of the shaft (4; 31), in such a way that its top side does not project outward from the recess (26; 50).

7. Arrangement (1; 28) according to claim 6, **characterised in that** the recess (26; 50) is designed in the form of a groove, in particular a circumferential groove.

8. Arrangement (1) according to one of the preceding claims, **characterised in that** the at least one wirelessly interrogable SAW sensor (19) is provided with a protective layer (27).

9. Arrangement (1; 28) according to one of the preceding claims, **characterised in that** the co-rotating antenna (17; 43) is arranged on a retaining ring (24; 49) which is attached to the shaft (4; 31).

10. Arrangement (1) according to claim 9, **characterised in that** the retaining ring (24) at least partially covers a recess (26) which is formed in the shaft (4) and which accommodates the at least one wirelessly interrogable SAW sensor (19).

## Revendications

1. Agencement (1; 28), comprenant une enveloppe (2; 29), au moins un arbre (4; 31) disposé à l'intérieur de l'enveloppe (2; 29) et soutenu au moyen de paliers (3; 30), qui s'étendent dans une ouverture de l'enveloppe, dans lequel, entre l'enveloppe (2; 29) et l'arbre (4; 31), dans la région de l'ouverture de l'enveloppe, est disposé un joint (13; 38) d'étanchéité d'arbre et comprenant au moins un système de capteur d'onde de surface pouvant être interrogé par radio, c'est-à-dire comprenant un système FOFW, qui a une unité (14, 41) d'interrogation, au moins une antenne (15; 42) à poste fixe, reliée électriquement à l'unité (14; 41) d'interrogation, au moins une antenne (17; 43) tournante fixée à poste fixe à l'arbre (4; 31) et au moins un capteur d'onde de surface, c'est-à-dire un capteur (19; 44) FOFW pouvant être interrogé par radio et relié électriquement à la au moins une antenne (17; 43) tournante,
**caractérisé en ce qu'**il est prévu un couvercle (5; 52) d'enveloppe, qui est constitué de manière annulaire et qui ferme l'ouverture de l'enveloppe et **en ce que** la au moins une antenne (15; 42) à poste fixe est fixée au couvercle (5; 32) de l'enveloppe et est mise en position par rapport à l'antenne (17; 43) tournante à une distance (A) définie dans la direction (a) axiale, l'antenne (15; 42) à poste fixe et l'antenne (17; 43) tournante se chevauchant l'une l'autre dans la direction (R) radiale.

2. Agencement (1; 28) suivant la revendication 1, **caractérisé en ce que** la au moins une antenne (15; 42) à poste fixe et/ou la au moins une antenne (17; 43) tournante est/sont constituée(s) de manière annulaire ou sous la forme d'un segment d'anneau.

3. Agencement (1; 28) suivant l'une des revendications précédentes, **caractérisé en ce que** le couvercle (5; 32) de l'enveloppe a un premier élément (6; 33) constitué de manière annulaire et ayant un diamètre intérieur assez grand, qui agit en appui sur au moins un palier (3; 30) et un deuxième élément (7; 34) constitué de manière annulaire, de diamètre intérieur petit, qui est disposé sur le joint (13, 33) d'étanchéité d'arbre.

4. Agencement (1) suivant la revendication 3, **caractérisé en ce que** la au moins une antenne (15) à poste fixe est disposée sur une surface (20) frontale, tournée vers l'intérieur de l'enveloppe (2), du deuxième élément (7) du couvercle de l'enveloppe.

5. Agencement (28) suivant la revendication 3, **caractérisé en ce que** la au moins une antenne (42) à poste fixe est disposée sur une surface (45) frontale, tournée vers le deuxième élément (34) du couvercle de l'enveloppe, du premier élément (33) du couvercle de l'enveloppe.

6. Agencement (1; 28) suivant l'une des revendications précédentes, **caractérisé en ce que** le au moins un capteur (19, 44) FOFW est disposé à l'intérieur d'un évidement (26; 50) constitué sur le pourtour extérieur de l'arbre (4; 31), de manière à ce que son côté supérieur ne dépasse pas vers l'extérieur de l'évidement (26; 50).

7. Agencement (1; 28) suivant la revendication 6, **caractérisé en ce que** l'évidement (26; 50) est constitué sous la forme d'une rainure, notamment d'une rainure de pourtour.

8. Agencement (1) suivant l'une des revendications précédentes, **caractérisé en ce que** le au moins un capteur (19) FOFW est pourvu d'un revêtement (27) de protection.

9. Agencement (1; 28) suivant l'une des revendications précédentes, **caractérisé en ce que** l'antenne (17; 43) tournante est disposée sur un anneau (24; 49) de maintien fixé à l'arbre (4; 31).

10. Agencement (1) suivant la revendication 9, **caractérisé en ce que** l'anneau (24) de maintien recouvre, au moins en partie un évidement (26) constitué dans l'arbre (4) et recevant le au moins un capteur (19) FOFW.
